# EUROPEAN PATENT SPECIFICATION

(11) **EP 2 356 900 B1**
(45) Date of publication and mention of the grant of the patent: **07.08.2013**
(21) Application number: 10425037.8
(22) Date of filing: 16.02.2010
(51) Int. Cl.: A01K 63/04

(54) **External filter unit for aquarium tank**
Aussenfiltereinheit für Aquariumbehälter
Filtre éxterieur pour aquarium

(43) Date of publication of application: 17.08.2011
(73) Proprietor: Askoll Holding S.r.l., 36031 Povolaro di Dueville (Vicenza) (IT)
(72) Inventor: Marioni, Elio, I-36031 Dueville (Vincenza) (IT)
(74) Representative: Botti, Mario

(56) References cited:
- WO-A1-01/70369
- JP-A- 2007 307 549
- US-A- 4 414 919

## Description

### Field of application

The present invention relates, in its more general aspect, to a filter unit for aquariums.

The invention is usefully applied as filter unit for a domestic aquarium; more particularly it is especially suitable for use as external filter unit.

### Prior art

As is known to persons skilled in the art, the proper management of an aquarium generally requires constant filtering and recirculation of the water which holds the fish species bred therein.

To ensure that this requirement is met, appropriate filter units are used, wherein the forced circulation of the water takes place via a predetermined filtering path. These filter units take in water from the aquarium tank and then return it therein, purified, at the end of said filtering path.

Internal filter units are commercially available, which are designed to be housed in the aquarium tank itself, or external, to be connected to the tank by means of appropriate conduits.

The filter units of the second type are presented in general as box-like bodies wherein a fluid path is defined, across one or more filters, for the water to be purified.

More particularly at least one filter of the so-called mechanical type is generally present, with a permeable entrance surface which intercepts the fluid path, retaining thereon the coarser impurities present in the water to be purified. The mechanical filter, in the more common cases, is made up of a polyurethane sponge or a synthetic wool membrane.

During normal functioning of the filter unit the impurities retained by the mechanical filter accumulate on its entrance surface, reducing in a short time the actual permeability of the filter. It is therefore necessary to clean the mechanical filter periodically in order to remove these impurities and allow the proper working of the entire filter unit.

In the external filter units known to date, this cleaning operation is relatively long and burdensome. In fact the cover of the filter unit has to be removed in order to be able to access the blocked mechanical filter. This cover is attached to the box-like body by means of a plurality of peripheral attachments which have to be released. Once the filter unit is opened, the mechanical filter still has to be extracted, cleaned, returned into position and finally the unit closed again, locking the abovementioned attachments.

Document WO 01/70369 discloses a filtering unit featuring a cylindrical filter, which may be rotated about its longitudinal axis. Fixed mechanical cleaning means, such as a scraper or brush, interfere with the extern surface of the filter and perform a cleaning action whenever the filter is rotated.

The technical problem at the basis of the present invention is that of devising a filter unit capable of facilitating and speeding up the operation of cleaning of the mechanical filter, limiting as far as possible the inconvenience of the operator and the down time of the device during the operations of routine maintenance.

### Summary of the invention

The abovementioned technical problem is solved by a filter unit for aquariums, comprising, in a container:
- a filtering path, extending between a fluid exit and entrance, for the circulation of a flow of liquid;
- a mechanical filter positioned along said filtering path for intercepting the flow of liquid circulating therein, said mechanical filter having an entrance surface oriented upstream of the filtering path;
- at least one scraper member designed to perform cleaning of the mechanical filter, detaching by scraping the impurities accumulated on said entrance surface;
- means for promoting a relative motion between scraper member and mechanical filter causing said scraping of the entrance surface of the mechanical filter.
- said scraper member is positioned on a slide said slide being reciprocatingly mobile in a direction paralid to a plane which contains the entrance surface.

In the filter described above it is possible to perform cleaning of the mechanical filter without having to perform opening of the external container, with consequent reduction in the times of maintenance and of the inconvenience of the operator concerned.

It should be noted that the means for promoting the relative motion between scraper member and mechanical filter may be means which can be actuated manually from the outside. In the preferred embodiment described herein below these means are of a purely mechanical nature.

The filter unit can provide an indicator light designed to report to the operator the blocking of the mechanical filter by the impurities accumulated on the entrance surface, and the consequent need to operate the abovementioned means.

In fact, given the longitudinal extension of the mechanical filters usually used in the art, it is advantageous to perform the scraping with a reciprocating member in a direction parallel to this extension.

It is advantageous to position the mechanical filter with entrance surface vertical, and restrain the slide also in a vertical direction of sliding. This arrangement allows in particular the depositing of the impurities at the base of the filter unit.

The scraper members can advantageously be a plurality, in such a way as to operate synchronously at different areas of the entrance surface defined previously.

The scraper members can be made up of blades projecting from the body of the slide which allow a good scraping action.

More particularly, horizontal and flexible blades allow excellent efficiency of the abovementioned operation of scraping.

The abovementioned means for promoting the relative motion between scraper member and mechanical filter can advantageously comprise an actuation pushbutton kinematically connected to the slide. In this case, a pressure exerted on the actuation pushbutton causes a displacement of the slide from the rest position. Elastic means can also be provided for maintaining said slide in a rest position without pressure on the actuation pushbutton, and for returning the slide into position on release of the pressure on the actuation pushbutton.

An advantageous way of creating said kinematic connection between actuation pushbutton and slide consists in placing between them a connection rod, sliding with limited play inside a passage of the container.

It should be noted that said connection rod can also be made in one piece with the actuation pushbutton, thus constituting a lower foot of this pushbutton.

The at least one scraper member moves inside a first compartment, on the base whereof an impurity discharge valve can be positioned and which can be actuated by an operator to allow the outflow of the impurities into an impurity collection space.

This system allows discharging of the impurities outside of the recirculation circuit, preventing them from returning to dissolve in the flow of water to be purified and depositing on the mechanical filter. Moreover the discharge valve prevents an accumulation of impurities on the base of the compartment which could undermine in the long term the easy sliding of the abovementioned slide.

The impurity collection space can be defined internally by a pull-out drawer housed below the first compartment. In this way it is made possible for the operator to eliminate easily the dirty water present in the space by pulling out and emptying the same drawer.

The impurity discharge valve mentioned above may comprise a shutter, rigidly connected by means of a stem to a discharge pushbutton accessible from the exterior of the container of the filter unit.

More particularly a cap may rise up from the base of the first compartment defining a transit space, open underneath above the impurity collection space. The shutter will therefore be designed to regulate the access of flow from the first compartment to the transit space; against actuation of the discharge pushbutton, the shutter will move away from a seat, allowing the outflow of the liquid inside the transit space and from here into the impurity collection space below.

One embodiment may provide the cap set against a lateral wall of the container, in such a way that the stem has to traverse only said lateral wall and the transit space to connect the shutter with the discharge pushbutton positioned outside of the container.

The container comprises preferably a box-like body and an upper closure cover. To allow the attachment of the cover to the box-like body, the filter unit may comprise at least one lateral attachment of the cover to the box-like body.

In a particularly advantageous embodiment, rather than being made according to the prior art, said lateral attachment may comprise a comb-like coupling slidingly restrained to the cover and intended to engage below a guide track integral with the box-like body in one of its lock positions, said guide track having gaps for allowing the disengaging of the comb-like coupling in case of sliding of the latter in a release position.

The lateral attachment described above allows particularly easy opening of the container, albeit without comprising visible mechanical members or other technical elements which could undermine the aesthetic of the filter unit.

It should be noted that said lateral attachment can be advantageously implemented on the filter units known to date independently of the presence of the scraper member and of the other innovative technical features described previously.

More particularly the abovementioned comb-like coupling can define the lower end of a slider with C-shaped section which embraces the guide track and a contact portion integral with the cover, said contact portion being superimposed over the guide track. A gasket can be advantageously inserted between contact portion and guide track to achieve the tightness of the container.

The slider can be kinematically restrained to at least one control lever accessible from the exterior of the filter unit; preferably this lever can be inserted in a special groove so as not to be visible when not raised to perform the release of the attachment.

The abovementioned attachments can be two in number, applied along two opposite edges of the container.

One advantage of the device described above comes from the extreme simplicity of the operations of routine maintenance regarding the cleaning of the mechanical filter; in fact it is no longer necessary in this case to open the container of the filter unit.

Moreover, also in the case of the other maintenance operations, which require in any case opening of the closure cover of the filter unit, the limited number of attachments and their functionality allow a reduction in the times and in the inconveniences linked to said opening operation.

Further features and advantages of the filter unit according to the invention will be made clear by the description herein below of a specific embodiment given by way of a non-limiting example with reference to the accompanying drawings.

### Brief description of the drawings

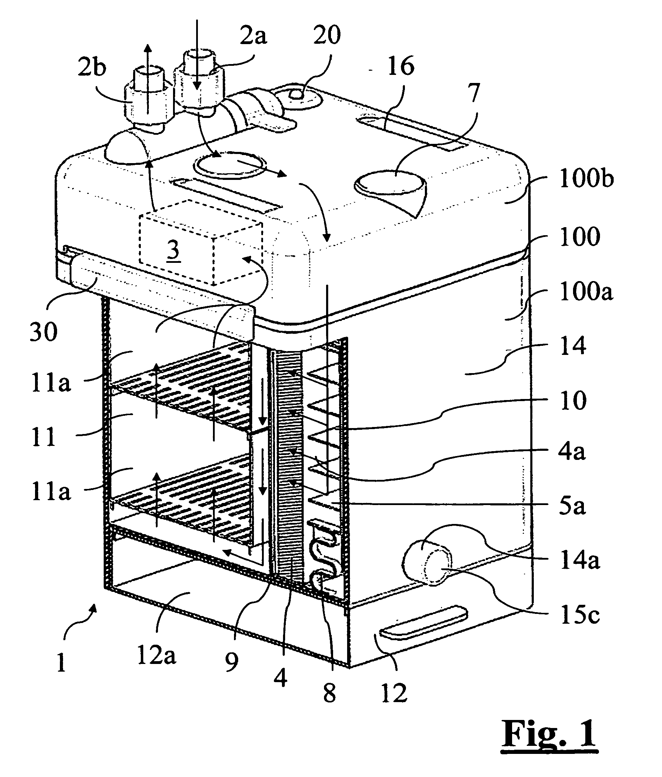

Figure 1 shows a partially sectioned perspective view of a filter unit according to the present invention, wherein continuous lines denote a filtering path inside the unit;

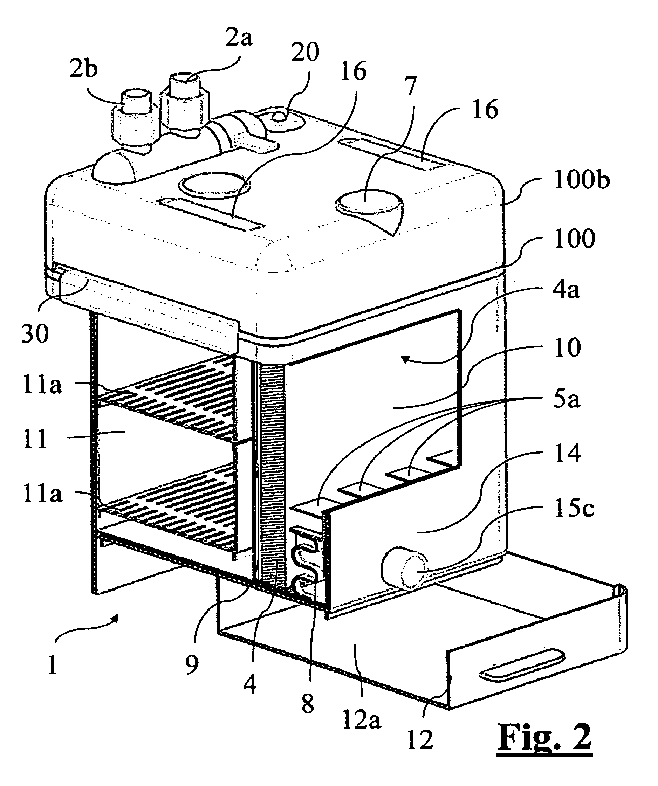

Figure 2 shows a partially sectioned perspective view of the filter unit of Figure 1 in one of its maintenance configurations;

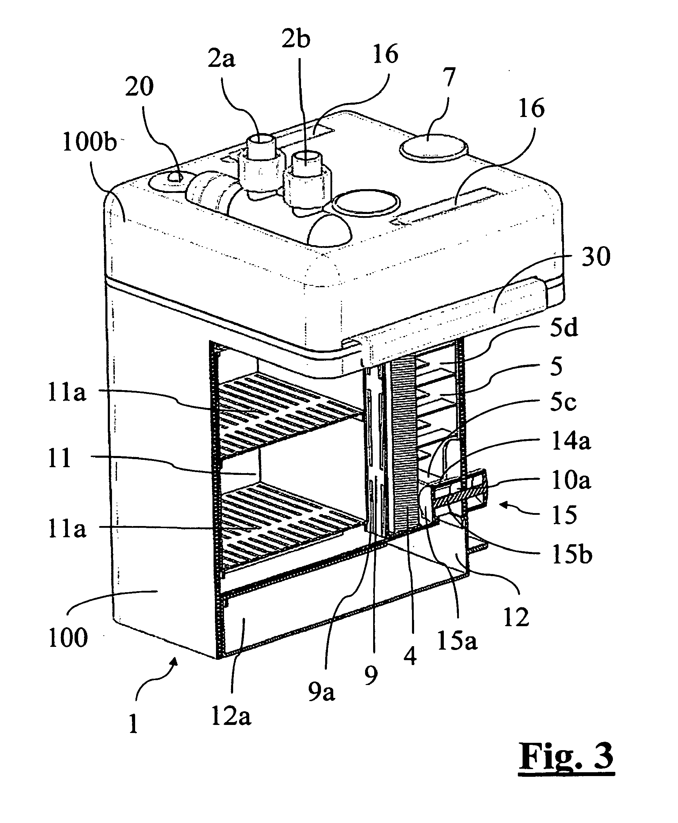

Figure 3 shows a partially sectioned perspective view of the filter unit of Figure 1;
Figures 4a-d show views, sectioned along parallel vertical planes, of a detail of the filter unit of Figure 1 in the configurations assumed during successive phases of a maintenance operation;
Figure 5 shows a schematic perspective view of the closure device of the filter unit according to Figure 1, the hidden parts of the device being shown by dotted lines.

### Detailed description

Referring to the accompanying drawings, 1 denotes generically a filter unit for aquariums.

More particularly the specific embodiment described with reference to said drawings relates to an external filter unit for home aquariums; it must therefore be connected to the aquarium tank by means of appropriate hydraulic connections, not illustrated in the accompanying drawings.

The filter unit 1 is shown in the drawings according to a normal working configuration. Herein below in the present description the positions and the orientations, relative and absolute, of the various elements which make up the unit, defined by means of terms such as upper and lower, above and below, horizontal and vertical, or other equivalent terms, should always be interpreted with reference to this configuration.

The filter unit 1 comprises a container 100, shaped substantially like a parallepiped with a square base, made up of a box-like body 100a closed above by a removable cover 100b.

The box-like body 100a is partitioned internally into a lower chamber, inside whereof slides a pull-out drawer 12 which defines an impurity collection space 12a, and into an upper chamber, of greater volumetric importance.

Said upper chamber is further divided by a vertical septum 9 into a first compartment 10 of smaller volume and into a second larger compartment 11. The vertical septum 9 has openings 9a which maintain the two compartments 10, 11 in fluid communication.

The cover 100b of the container is provided above with a fluid entrance 2a and a fluid exit 2b to allow hydraulic connection thereof to an aquarium tank. Between said fluid entrance 2a and said fluid exit 2b, inside the container 100, a filtering path is defined for a flow of liquid coming from the aquarium tank and returned therein once filtering has taken place.

Said filtering path comprises an initial part defined inside the cover 100b, which connects the fluid entrance 2a to the first compartment 10 formed in the box-like body 100a of the container 100.

Inside the first compartment, close to the vertical septum 9, a mechanical filter 4 is positioned which, in the embodiment described, takes the shape of a filter sponge. Alternatively, said mechanical filter can be made up of synthetic wool or of another filtering medium known in the art. Said mechanical filter 4, of limited thickness, covers completely the vertical septum 9 so as to intercept the whole of the flow of liquid in transit towards the second compartment.

Said mechanical filter has an entrance surface 4a, oriented upstream of the filtering path, above which in working conditions impurities 200 contained in the flow of liquid circulating in the filter unit 1 are retained. The sedimentation of the impurities 200 undermines in the long term the permeability of the mechanical filter 4, blocking the filtering path and requiring a cleaning operation by an operator.

An indicator light 20, positioned on the cover 100b, lights up to report the blocking of the mechanical filter 4 and the need to clean the entrance surface 4a.

Inside the second compartment two baskets 11a are stacked, designed to contain adsorbent and/or biological material intended for the filtering of the flow of liquid in transit through them. The baskets 11 a are closed laterally and open above; moreover they have lower entrance slots. The flow of liquid therefore circulates through said entrance slots traversing in series the two baskets, and then flows into an end part of the filtering path whose inlet is positioned above the upper basket 11a. Said end part of the filtering path is formed inside the cover 100b.

In order to allow the circulation of said flow of liquid along the filtering path described above the filter unit 1 comprises in its interior special pumping means 3. In the embodiment described said pumping means are provided inside the cover 100b, along the end part of the filtering path which flows into the fluid exit 2b.

Said pumping means 3 may take the shape of an electric pump of a known type; in this case, the condition of blocking of the mechanical filter 4 which lights up the indicator light 20 can be determined on the basis of the work conditions of the motor which actuates the pump.

Inside the first compartment 10 a slide 5 is positioned, designed to be able to slide vertically in a direction of sliding x parallel to the entrance surface 4a.

Said slide 5 is made up of a main body 5d, substantially flat and sliding close to a lateral wall 14 of the box-like body 10a opposite the vertical septum 9, wherefrom a plurality of scraper members 5a extend by projecting towards the mechanical filter 4.

The scraper members 5a, made up of flexible blades of rectangular section, are shaped and dimensioned so as to operate, against reciprocal motion of the slide 5 in the direction of sliding x, a mechanical action of scraping on the entrance surface 4a of the mechanical filter 4. Said mechanical action causes the detachment of the impurities 200 deposited on the entrance surface 4a, and the consequent falling of the latter on the base of the first compartment 10.

To obtain an effective action of scraping, the flexible blades are positioned along horizontal planes, in such a way that their free end has a linear profile orthogonal in relation to the direction of sliding x.

We note moreover that said blades are positioned in a plurality of vertical rows, each row comprising five blades intended to scrape the mechanical filter 4 at different heights.

The width of the slide 5 and the length of the blades are such as to allow the accurate housing of the assembly inside the first compartment 10, so as to allow only the translation of the assembly along the aforesaid direction of sliding x.

The slide 5 has, in proximity of its upper end, a thrust plinth 5b; the lower end has instead a horizontal abutment shelf 5c.

The slide 5 is maintained in a rest position by elastic means 8, constituted in this case by spring members, positioned between the base of the first compartment 10 and the abutment shelf 5c.

To allow an operator to promote the motion of the scraper members 5a on the mechanical filter 4, the filter unit 1 comprises, inserted inside an upper seat of the cover 100b, an actuation pushbutton 7. Below said actuation pushbutton 7 a connection rod 17 is inserted, sliding with limited play inside a passage 18 which traverses the cover 100b. The lower end of the connection rod 17 is designed to come into contact with the thrust plinth 5b of the slide 5 in the case of pressure of the same pushbutton by an operator. The actuation pushbutton 7 is therefore kinematically connected to the slide 5, and a pressure exerted thereon opposes the action of the elastic means 8 causing a displacement of the slide 5 from its rest position. Once the pressure has been released, the elastic means 8 bring the slide 5 back into the original position.

On the base of the first compartment 10 the filter unit comprises an impurity discharge valve 15 which can be actuated by an operator which enables the impurities 200 decanted in the first compartment 10 to outflow towards the impurity collection space 12a defined previously, i.e. inside the pull-out drawer 12 housed below the first compartment 10.

Said impurity discharge valve 15 comprises a shutter 15a, which in conditions of rest closes the access to a transit space 10a, defined by a cap 14a which rises up from the flat base of the first compartment 10, set at the lateral wall 14. Said transit space 10a opens underneath above the impurity collection space 12a.

It should be noted that the lower end of the main body 5d of the slide 5 is shaped so as not to interfere, during its movement of sliding, with the cap 14a.

The shutter 15a is rigidly connected, by means of a stem 15b which traverses the transit space 10a and the lateral wall 14, to a discharge pushbutton 15c sliding inside a bush 14b projecting from the outer side of the lateral wall 14.

By therefore exerting a pressure on the discharge pushbutton 15c, it slides inside the bush 14b and draws with it the shutter 15a, which moves away from its seat, allowing the water present in the first compartment 10 to flow out, via the transit space 14a, into the impurity collection space 12a.

On release of the pressure on the discharge pushbutton 15c, the impurity discharge valve 15 returns into its rest position either due to the pressure of the fluid present inside the first compartment 10 or possibly thanks to elastic means (not illustrated) appropriately housed inside the bush 14b or the transit space 14a.

The pull-out drawer 12 which defines the impurity collection space 12a is at least partially made in transparent material so as to allow the operator visual monitoring of the level of the fluid contained therein. The pull-out drawer 12 can be appropriately extracted to discharge said fluid.

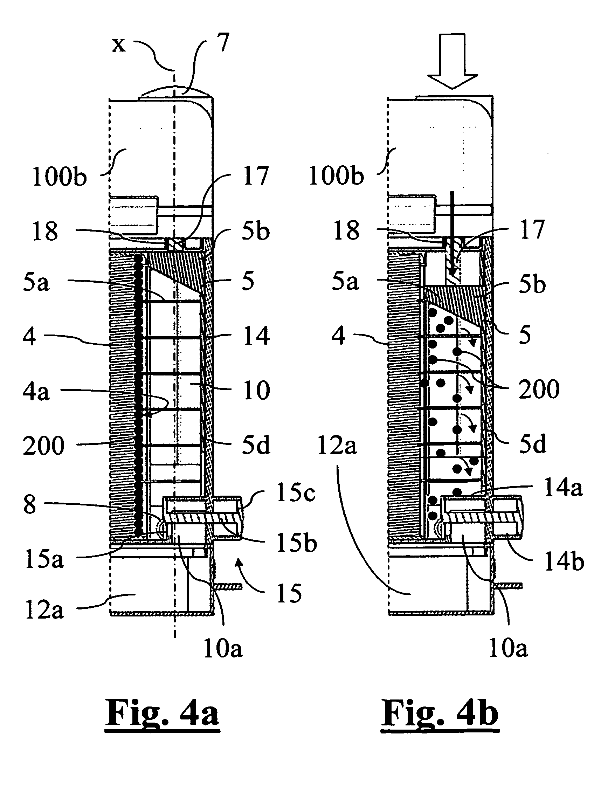

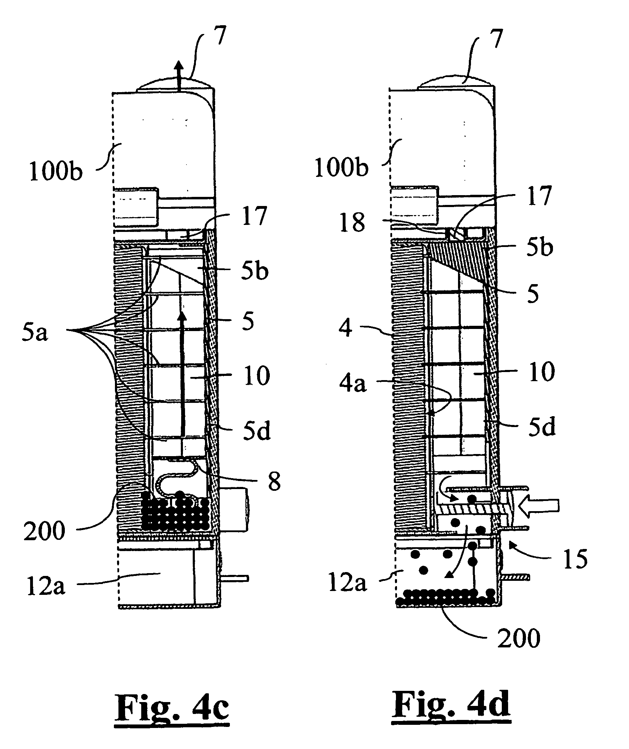

Referring to the accompanying Figures 4a-d, we shall describe herein below the operations which an operator, warned by the indicator light 20 of the condition of malfunctioning of the filter unit 1, has to undertake to perform the cleaning of the mechanical filter 20.

First of all the operator has to press the actuation pushbutton 7 once or several times. At each pressure, the slide 5 slides downwards and the blades associated therewith rub along the entrance surface 4a of the mechanical filter 4, ensuring a first action of scraping. At each release, the elastic means 8 return the slide 5 into the rest position and the blades glide in the opposite direction along the entrance surface 4a, causing a further scraping action. Thanks to the repeated actions of scraping the impurities 200 detach from the entrance surface 4a, decanting on the base of the first compartment 10.

Subsequently the operator exerts a pressure on the discharge pushbutton 15c, actuating the impurity discharge valve 15 and allowing the outflow of the fluid and of the impurities 200 present on the base of the first compartment 10 inside the impurity collection space 12a. The operator can then decide to extract the pull-out drawer 12 and to empty it of its content in a suitable place.

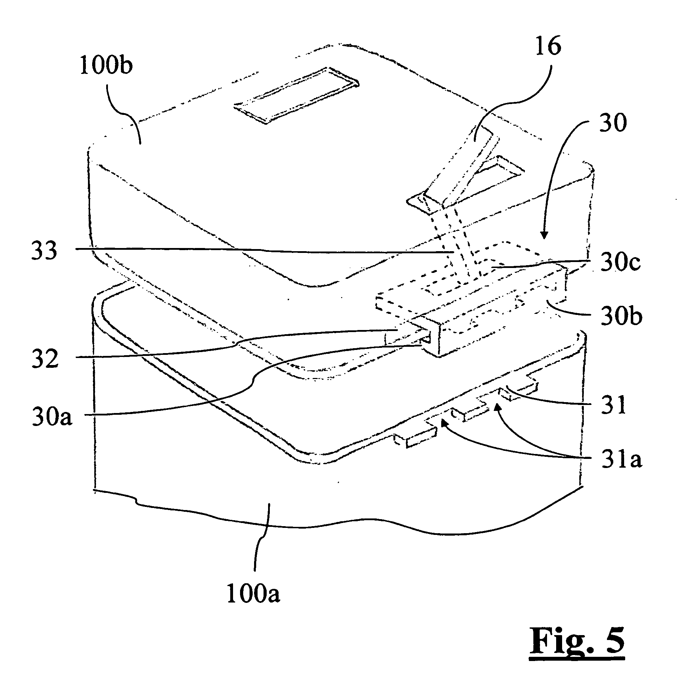

The cover 100b which closes the box-like body 100a above is fixed above to the latter by means of two lateral attachments 30 positioned on two opposite sides of the perimeter of contact between the two elements, which are described herein below in greater detail with reference to the accompanying Figure 5.

In proximity of the two upper edges of the box-like body 100a involved by the lateral attachments 30, guide tracks 31 are provided, turned towards the exterior of the container 100. Said guide tracks 31 have a longitudinal extension with gaps 31a whose function will be made clearer further on in the description. Above, the guide tracks 31 define a support surface for a contact portion 32 integral with the cover 100b, which also extends, projecting, towards the exterior of the container so as to be superimposed along the entire radial extension of the same track.

The lower surface of the contact portion 32, which is set above the guide track 31, has a longitudinal groove inside whereof a seal gasket (not visible in the drawings) is inserted.

In the embodiment described here, the contact portion 32 constitutes the peripheral edge of a plate (not visible in the drawings) which defines below the cover 100b; the central part of this plate 34 is inserted with shape coupling inside the upper opening of the box-like body 100a.

Each of the lateral attachments 30 comprises a slider 30b, slidingly restrained in proximity of a lower edge of the cover 100b. Said slider extends longitudinally along said edge and has a C-shaped section with upper end slidingly restrained above the contact portion 32 defined above. The C-shaped section embraces the guide track 31 and the contact portion 32 superimposed thereon, making them integral and ensuring the attachment of the cover 100b on the box-like body 100a.

The lower free end of the C-shaped section of the slider 30b is defined by a comb-like coupling 30a, which is intended to engage below the guide track 31 in one of its lock positions.

When the slider 30b translates, the comb-like coupling 30a moves from the lock position to a release position, at which position the teeth of the comb-like coupling 30a are aligned with the gaps 31a of the guide track 31. In this position, the comb-like coupling no longer restrains the guide track 31 to the contact portion 32 of the cover 100b, which is therefore released from the box-like body 100a.

To allow an operator to move the sliders 30b of the two attachments 30 from the lock position to the release position and vice versa, the filter unit 1 according to the invention has two control levers 16, each of which is kinematically restrained to one of the sliders 30b. More particularly each of said control levers 16, which can be actuated separately, is integral with a transmission rod 33, which is in turn restrained to the slider 30b by means of insertion in a longitudinal slot 30c formed on the portion of slider 30b extending inside the cover 100b. These control levers 16 are mobile between a lowered position, wherein they are fully inserted in two grooves open on the upper surface of the cover 100b, and a raised position, wherein they are extracted from these grooves. The lowered position of the levers corresponds to the lock position of the relative attachment 30, so that the lever does not define any further bulk or aesthetic problem during the functioning of the filter unit.

Obviously a person skilled in the art, with the aim of meeting contingent and specific needs, many make numerous changes and modifications to the filter unit described above, all moreover contained within the sphere of protection of the invention as defined by the following claims.

## Claims

1. Filter unit (1) for aquariums, comprising, in a container (100):
- a filtering path, extending between an entrance (2a) and an exit (2b) of fluid, for the circulation of a how of liquid;
- a mechanical filter (4) positioned along said filtering path to intercept the flow of liquid circulating therein, said mechanical filter (4) having an entrance surface (4a) oriented upstream of the filtering path;
**characterised in that** it comprises moreover, again inside said container (100):
- at least one scraper member (5a) designed to perform cleaning of the mechanical filter (4), detaching impurities (200) accumulated on said entrance surface (4a) by means of scraping;
- means for promoting a relative motion between scraper member (5a) and mechanical filter (4) causing said scraping of the entrance surface (4a) of the mechanical filter (4);
**characterized in that**
said scraper member (5a) is positioned on a slide (5), said slide (5) being reciprocatingly mobile in a direction of sliding (x) parallel to a plane which contains the entrance surface (4a).

2. Filter unit (1) according to claim 1, wherein said means for promoting a relative motion between scraper member (5a) and mechanical filter (4) can be actuated manually from the outside.

3. Filter unit (1) according to claims 1 or 2, wherein said scraper members (5a) are a plurality of blades projecting from a main body (5d) of said slide (5).

4. Filter unit (1) according to claim 3, wherein said blades are horizontal and flexible.

5. Filter unit (1) according to one of the previous claims, wherein said means for promoting the relative motion between scraper member (5a) and mechanical filter (4) comprise an actuation pushbutton (7) kinematically connected to said slide (5), a pressure exerted on said actuation pushbutton (7) causing a displacement of the slide (5) from a rest position, and elastic means (8) designed to maintain said slide (5) in the rest position without pressure on the actuation pushbutton (7).

6. Filter unit (1) according to claim 5, wherein between said actuation pushbutton (7) and said slide (5) a connection rod (17) is placed, sliding with limited play inside a passage (18) of the container (100).

7. Filter unit (1) according to one of the previous claims, wherein said scraper member (5a) moves inside a first compartment (10), on the base whereof an impurity discharge valve (15) is positioned, which can be actuated by an operator to allow the outflow of the impurities (200) into an impurity collection space (12a).

8. Filter unit (1) according to claim 7, wherein said impurity collection space (12a) is internally defined by a pull-out drawer (12) housed below the first compartment (10).

9. Filter unit (1) according to one of claims 7 or 8 wherein said impurity discharge valve (15) comprises a shutter (15a) rigidly connected by means of a stem (15b) to a discharge pushbutton (15c) accessible from the exterior of the container (100).

10. Filter unit (1) according to claim 9, comprising a cap (14a) which rises up from the base of the first compartment (10) and defines a transit space (10a) which opens underneath above the impurity collection space (12a), said shutter (10) regulating the access of flow from the first compartment (10) to said transit space (10a).

11. Filter unit (1) according to claim 10, wherein said cap (14a) is set against a lateral wall (14) of the container (100), said stem (15b) traversing said lateral wall (14) and the transit space (10a).

12. Filter unit (1) according to any one of the previous claims, wherein said container (100) comprises a box-like body (100a) and an upper closure cover (100b), said filter unit (1) comprising at least one lateral attachment (30) of the cover (100b) to the box-like body (100a), said lateral attachment (30) comprising a comb-like coupling (30a) slidingly restrained to the cover (100b) and intended to engage below a guide track (31) integral with the box-like body (100a) in one of its lock positions, said guide track (31) having gaps (31a) for allowing the disengaging of the comb-like coupling (30a) in case of sliding of the latter in a release position.

13. Filter unit (1) according to claim 12, wherein said comb-like coupling (30a) defines the lower end of a slider (30b) with C-shaped section which embraces the guide track (31) and a contact portion (32) integral with the cover (100b), said contact portion (32) being superimposed on the guide track (31).

14. Filter unit (1) according to claim 13, said slider (30b) being kinematically restrained to at least one control lever (16) accessible from the exterior of the filter unit (1).

## Patentansprüche

1. Filtereinheit (1) für Aquarien, welche umfasst, in einem Behälter (100):
- eine Filterstrecke, die sich zwischen einem Eintritt (2a) und einem Austritt (2b) von Fluid erstreckt, für die Zirkulation eines Flüssigkeitsstroms;
- ein mechanisches Filter (4), das entlang der Filterstrecke positioniert ist, um den darin zirkulierenden Flüssigkeitsstrom abzufangen, wobei das mechanische Filter (4) eine Eintrittsfläche (4a) aufweist, die der stromaufwärtigen Seite der Filterstrecke zugewandt ist;
**dadurch gekennzeichnet, dass** sie außerdem, ebenfalls innerhalb des Behälters (100), umfasst:
- mindestens ein Abstreifelement (5a), das dazu ausgebildet ist, eine Reinigung des mechanischen Filters (4) durchzuführen, indem es Verunreinigungen (200), die sich auf der Eintrittsfläche (4a) angesammelt haben, durch Abschaben löst:
- Mittel zum Ausführen einer relativen Bewegung zwischen dem Abstreifelement (5a) und dem mechanischen Filter (4), welche das Abschaben der Eintrittsfläche (4a) des mechanischen Filters (4) bewirken; **dadurch gekennzeichnet, dass**
das Abstreifelement (5a) auf einem Schlitten (5) positioniert ist, wobei der Schlitten (5) eine hin- und hergehende Bewegung in einer Gleitrichtung (x) ausführen kann, die zu einer Ebene parallel ist, welche die Eintrittsfläche (4a) enthält.

2. Filtereinheit (1) nach Anspruch 1, wobei die Mittel zum Ausführen einer relativen Bewegung zwischen dem Abstreifelement (5a) und dem mechanischen Filter (4) manuell von außen betätigt werden können.

3. Filtereinheit (1) nach Anspruch 1 oder 2, wobei die Abstreifelemente (5a) eine Vielzahl von Klingen sind, die aus einem Hauptkörper (5d) des Schlittens (5) herausragen.

4. Filtereinheit (1) nach Anspruch 3, wobei die Klingen horizontal und flexibel sind.

5. Filtereinheit (1) nach einem der vorhergehenden Ansprüche, wobei die Mittel zum Ausführen der relativen Bewegung zwischen dem Abstreifelement (5a) und dem mechanischen Filter (4) eine Betätigungstaste (7), die mit dem Schlitten (5) kinematisch verbunden ist, wobei ein auf die Betätigungstaste (7) ausgeübter Druck eine Verschiebung des Schlittens (5) aus einer Ruheposition bewirkt, und elastische Mittel (8), die dazu ausgebildet sind, den Schlitten (5) ohne Druck auf die Betätigungstaste (7) in der ruheposition zu halten, umfassen.

6. Filtereinheit (1) nach Anspruch 5, wobei zwischen der Betätigungstaste (7) und dem Schlitten (5) eine Verbindungsstange (17) angeordnet ist, die mit begrenztem Spiel innerhalb eines Durchgangs (18) des Behälters (100) gleitet.

7. Filtereinheit (1) nach einem der vorhergehenden Ansprüche, wobei sich das Abstreifelement (5a) innerhalb einer ersten Kammer (10) bewegt, auf deren Boden ein Verunreinigungs-Auslassventil (15) positioniert ist, welches von einem Bediener betätigt werden kann, um das Ausfließen der Verunreinigungen (200) in einen Verunreinigungs-Sammelraum (12a) zu ermöglichen.

8. Filtereinheit (1) nach Anspruch 7, wobei der Verunreinigungs.. Sammelraurn (12a) innen durch einen ausziehbaren Schubkasten (12) definiert ist, der unter der ersten Kammer (10) angeordnet ist.

9. Filtereinheit (1) nach einem der Ansprüche 7 oder 8, wobei das Verunreinigungs-Auslassventil (15) eine Verschlussklappe (15a) umfasst, die mittels eines Schafts (15b) starr mit einer Auslass-Taste (15c) verbunden ist, die von der Außenseite des Behälters (100) her zugänglich ist.

10. Filtereinheit (1) nach Anspruch 9, welche eine Kappe (14a) umfasst, welche sich von dem Boden der ersten Kammer (10) aus erhebt und einen Übergangsraum (10a) definiert, welcher sich an der Unterseite über dem Verunreinigungs-Sammelraum (12a) öffnet, wobei die Verschlussklappe (10) den Zugang von Strömung aus der ersten Kammer (10) zu dem Übergangsraum (10a) regelt.

11. Filtereinheit (1) nach Anspruch 10, wobei die Kappe (14a) an eine Seitenwand (14) des Behälters (100) angestellt ist, wobei der Schaft (15b) die Seitenwand (14) und den Übergangsraum (10a) durchquert.

12. Filtereinheit (1) nach einem der vorhergehenden Ansprüche, wobei der Behälter (100) ein kastenähnliches Gehäuse (100a) und einen oberen Verschlussdeckel (100b) umfasst, wobei die Filtereinheit (1) mindestens ein seitliches Befestigungselement (30) zur Befestigung des Deckels (100b) an dem kastenähnlichen Gehäuse (100a) umfasst, wobei das seitliche Befestigungselement (30) eine kammähttliche Kupplung (30a) umfasst, die gleitend an dem Deckel (100b) gehalten wird und dazu bestimmt ist, unter einer Führungsschiene (31), die mit dem kastenähnlichen Gehäuse (100a) einstückig ausgebildet ist, in einer ihrer Verriegelungspositionen in Eingriff zu gelangen, wobei die Führungsschiene (31) Zwischenräume (31a) aufweist, um das Lösen der kammähnlichen Kupplung (30a) aus dem Eingriff im Falle des Gleitens der Letzteren in eine Löseposition zu ermöglichen.

13. Filtereinheit (1) nach Anspruch 12, wobei die kammähnliche Kupplung (30a) das untere Ende eines Schiebers (30b) mit C-förmigem Querschnitt definiert, welcher die Führungsschiene (31) und einen mit dem Deckel (100b) einstückig ausgebildeten Kontaktabschnitt (32) umgreift, wobei dieser Kontaktabschnitt (H2) auf die Führungsschiene (31) aufgesetzt ist.

14. Filtereinheit (1) nach Anspruch 13, wobei der Schieber (30b) durch mindestens einen Steuerhebel (16) kinematisch geführt ist, der von der Außenseite der Filtereinheit (1) zugänglich ist.

## Revendications

1. Unité de filtrage (1) pour aquariums comprenant, dans un récipient (100) ;
- un circuit de filtrage, s'étendant entre une entrée (2a) et une sortie (2b) de fluide, pour la circulation d'un écoulement de liquide ;
- un filtre mécanique (4) positionné le long dudit circuit de filtrage pour intercepter l'écoulement de liquide circulant à l'intérieur de celui-ci, ledit filtre mécanique (4) possédant une surface (4a) d'entrée orientée en amont du circuit de filtrage ;
**caractérisé en ce qu'**il comprend en outre, toujours à l'intérieur dudit récipient (100) :
- au moins un élément racleur (5a) conçu pour effectuer le nettoyage du filtre mécanique (4), en détachant les impuretés (200) accumulées sur ladite surface (4a) d'entrée au moyen d'un raclage ;
- un moyen d'induire un mouvement relatif entre l'élément racleur (5a) et le filtre mécanique (4) entraînant ledit raclage de la surface (4a) d'entrée du filtre mécanique (4) ;
**caractérisé en ce que**
ledit élément racleur (5a) est positionné sur une glissière (5), ladite glissière (5) pouvant se déplacer en va-et-vient dans un sens de glissement (x) parallèle à un plan qui contient la surface (4a) d'entrée.

2. Unité de filtrage (1) selon la revendication 1, dans lequel ledit moyen d'induire un mouvement relatif entre l'élément racleur (5a) et le filtre mécanique (4) peut être actionné manuellement de l'extérieur,

3. Unité de filtrage (1) selon les revendications 1 ou 2, dans lequel lesdits éléments racleurs (5a) sont une pluralité de lames faisant saillie par rapport à un corps principal (5d) de ladite glissière (5).

4. Unité de filtrage (1) selon la revendication 3, dans lequel lesdites lames sont horizontales et flexibles.

5. Unité de filtrage (1) selon l'une des revendications précédentes, dans lequel ledit moyen d'induire le mouvement relatif entre l'élément racleur (5a) et le filtre mécanique (4) comprend un bouton-poussoir (7) d'actionnement relié de manière cinématique à ladite glissière (5), une pression exercée sur ledit bouton poussoir (7) d'actionnement entraînant un déplacement de la glissière (5) depuis une position de repos, et un moyen élastique (8) conçu pour maintenir ladite glissière (5) en position de repos sans pression du bouton poussoir (7) d'actionnement.

6. Unité de filtrage (1) selon la revendication 5, dans lequel une tige (17) de liaison, coulissant avec un jeu limité à l'intérieur d'un passage (18) du récipient (100), est placée entre ledit bouton-poussoir (7) d'actionnement et ladite glissière (5).

7. Unité de filtrage (1) selon l'une des revendications précédentes, dans lequel ledit élément racleur (5a) se déplace à l'intérieur d'un premier compartiment (10), sur la base duquel une soupape (15) de refoulement des impuretés est positionnée, laquelle peut être actionnée par un opérateur pour permettre l'évacuation des impuretés (200) dans un espace (12a) de collecte des impuretés.

8. Unité de filtrage (1) selon la revendication 7, dans lequel ledit espace (12a) de collecte des impuretés est défini à l'intérieur par un tiroir escamotable (12) logé en dessous du premier compartiment (10).

9. Unité de filtrage (1) selon l'une des revendications 7 ou 8, dans lequel ladite soupape (15) de refoulement des impuretés comprend un obturateur (15a) relié de manière rigide au moyen d'une tige (15b) à un bouton-poussoir de refoulement (15c) accessible depuis l'extérieur du récipient (100),

10. Unité de filtrage (1) selon la revendication 9, comprenant un couvercle (14a) qui s'élève depuis la base du premier compartiment (10) et définit un espace (10a) de transit qui s'ouvre par le bas au-dessus de l'espace (12a) de collecte des impuretés, ledit obturateur (10) régulant l'accès d'écoulement du premier compartiment (10) audit espace (10a) de transit,

11. Unité de filtrage (1) selon la revendication 10, dans lequel ledit couvercle (14a) est disposé contre une paroi latérale (14) du récipient (100), ladite tige (15b) traversant ladite paroi latérale (14) et l'espace (10a) de transit.

12. Unité de filtrage (1) selon l'une quelconque des revendications précédentes, dans lequel ledit récipient (100) comprend un corps (100a) de type caisson et un couvercle (100b) de fermeture supérieur, ledit filtre (1) comprenant au moins une fixation latérale (30) du couvercle (100b) au corps (100a) de type caisson, ladite fixation latérale (30) comprenant un couplage (30a) de type peigne maintenu de manière coulissante sur le couvercle (100b) et destiné à s'engager en dessous d'un rail (31) de guidage d'un seul tenant avec le corps (100a) de type caisson dans une de ses positions de verrouillage, ledit rail (31) de guidage présentant des interstices (31a) pour permettre le désengagement du couplage (30a) de type peigne en cas de coulissement de ce dernier dans une position de libération,

13. Unité de filtrage (1) selon la revendication 12, dans lequel ledit couplage (30a) de type peigne définit l'extrémité inférieure d'un coulisseau (30b) avec une section en forme de C qui épouse le rail (31) de guidage et une partie (32) de contact d'un seul tenant avec le couvercle (100b), ladite partie de contact (32) se superposant au rail (31) de guidage.

14. Unité de filtrage (1) selon la revendication 13, ledit coulisseau (30b) étant maintenu de manière cinématique sur au moins un levier (16) de commande accessible depuis l'extérieur du filtre (1).
